(19) Europäisches Patentamt
European Patent Office
Office européen des brevets

(11) EP 2 439 854 A1

(12) EUROPEAN PATENT APPLICATION
published in accordance with Art. 153(4) EPC

(43) Date of publication:
11.04.2012 Bulletin 2012/15

(51) Int Cl.:
*H04B 3/32* (2006.01)

(21) Application number: 10782990.5

(22) Date of filing: 07.06.2010

(86) International application number:
PCT/CN2010/073595

(87) International publication number:
WO 2010/139286 (09.12.2010 Gazette 2010/49)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 05.06.2009 CN 200910146919

(71) Applicant: Huawei Technologies Co., Ltd.
Shenzhen, Guangdong 518129 (CN)

(72) Inventors:
• RAPHAEL, Cendrillon
Shenzhen
Guangdong 518129 (CN)
• LI, Cheng
Shenzhen
Guangdong 518129 (CN)

(74) Representative: Pfenning, Meinig & Partner GbR
Theresienhöhe 13
80339 München (DE)

(54) **METHOD AND DEVICE FOR ESTIMATING FAR END CROSSTALK CHANNEL**

(57)     A Far-End Crosstalk channel estimation method and apparatus are provided. The method is used for estimating a Far-End Crosstalk channel imposed by a first line onto a second line in a two-line pair scenario, and includes: activating a first line independently, and obtaining a line noise of the first line as a first line noise; activating the first line and a second line, and obtaining a line noise of the first line as a second line noise; and determining a Far-End Crosstalk channel imposed by the second line onto the first line to be: (the second line noise - the first line noise)/a transmit power spectral density of the second line, where the transmit power spectral density of the second line is known. Through the method and apparatus, the Far-End Crosstalk channel imposed by the RT line onto the CO line in a two-line pair scenario or a multi-line pair scenario is estimated quickly through simple line control operations with no need of an additional test device or collection of massive statistic information for a long period of time.

300

```
        ┌─────────┐
        │  Start  │
        └────┬────┘
             │
┌────────────────────────────┐
│ Activate a CO line         │
│ independently and          │  S310
│ obtain a line noise of the │
│ CO line after the          │
│ activation succeeds        │
└────────────┬───────────────┘
             │
┌────────────────────────────┐
│ Activate an RT line and    │
│ the CO line, and obtain a  │  S320
│ line noise of the CO line  │
│ after the activation       │
│ succeeds                   │
└────────────┬───────────────┘
             │
┌────────────────────────────┐
│ Determine a Far-End        │
│ Crosstalk channel imposed  │
│ by the RT line onto the    │  S330
│ CO line according to the   │
│ line noises obtained in    │
│ steps S210 and S220        │
└────────────┬───────────────┘
             │
        ┌────┴────┐
        │   End   │
        └─────────┘
```

FIG. 3

EP 2 439 854 A1

## Description

This application claims priority to Chinese Patent Application No. 200910146919.0, filed with the Chinese Patent Office on June 5, 2009 and entitled "METHOD AND APPARATUS FOR ESTIMATING FAR-END CROSSTALK CHANNEL", which is hereby incorporated by reference in its entirety.

## FIELD OF THE INVENTION

Embodiments of the present invention relate to the field of data communications, and in particular, to a method and an apparatus for estimating a Far-End Crosstalk channel.

## BACKGROUND OF THE INVENTION

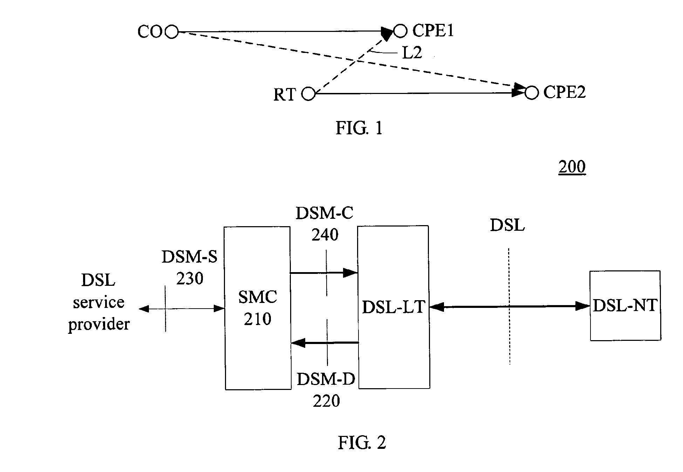

xDSL is a general term of all DSL (Digital Subscriber Line, digital subscriber line) technologies, and is a high-speed data transmission technology that uses a twisted pair telephone line, namely, a unshielded twist pair (Unshielded Twist Pair, UTP), for transmission. Besides DSL for baseband transmission, such as IDSL (DSL based on ISDN (Integrated Services Digital Network, integrated services digital network)) and SHDSL (Symmetric High-speed DSL, symmetric high-speed DSL), xDSL for passband transmission uses the frequency division multiplexing technology to make the xDSL and the POTS (Plain Old Telephone Service, plain old telephone service) coexist on the same twisted pair. The xDSL occupies a high-frequency band, the POTS occupies a baseband part that is lower than 4 KHz, and a POTS signal is separated from an xDSL signal through a splitter. The xDSL for passband transmission employs Discrete Multi-Tone (DMT) modulation. A system that provides access to multiple xDSL signals is referred to as a DSL Access Multiplexer (DSLAM). With the increase of the band used by the xDSL technology, the problem of crosstalk and especially the crosstalk from high-frequency band becomes increasingly notorious. Crosstalk is generally categorized, based on features, into Near-End Crosstalk (NEXT) and Far-End Crosstalk (FEXT). Because uplink and downlink channels of the xDSL employ frequency division multiplexing, generally the NEXT does not impair the system performance too much. However, the FEXT affects the transmission performance of a line seriously. The FEXT is **characterized in that** a transmitter of an interfering line pair is far away from a receiver of an interfered line pair; an interference signal is transmitted along the interfering line pair, and coupled to the interfered line pair; and a generated crosstalk signal is transferred to the receiver of the interfered line pair along the interfered line pair. FIG 1 is a schematic diagram of FEXT illustrated in, for example, a CO/RT two-line pair scenario. In FIG 1, CO is a central office device, and RT is a remote device; CPE 1 and CPE2 are Customer Premises Equipment corresponding to CO and RT respectively; a solid arrow indicates normal signal transmission, and a dotted arrow indicates a Far-End Crosstalk signal. Herein, a line from CO to CPE1 is referred to as a CO line, and a line from RT to CPE2 is referred to as an RT line. Other terms may be used provided that the terms do not affect the protection scope of the present invention. FIG 1 schematically illustrates FEXT in, for example, a CO/RT two-line pair (or two-line) scenario. Definitely, in practical application, a cable bundle may include multiple lines, and the FEXT exists between these lines. The FEXT exists not only between a CO line and an RT line, but also between two CO lines, and between two RT lines. In all such FEXTs, the crosstalk imposed by the RT line onto the CO line affects the transmission performance most seriously. In FIG 1, a dotted line L2 indicates the Far-End Crosstalk imposed by the RT line onto the CO line, which affects the performance most seriously. When users of multiple lines in a bundle of cables require activation of the xDSL service, the FEXT causes a low rate, instable performance, and even failure of service activation to some line, and finally leads to a low line activation rate of the DSLAM.

The Dynamic Spectral Management (DSM) solution is one of the technical solutions for eliminating or mitigating the impact of Far-End Crosstalk. The DSM technology concentratedly optimizes and manages various parameter configurations and signal transmit power spectral density by a series of methods, and even coordinates the transmission and receiving of signals in a whole cable bundle, so that the line transmission performance in the whole cable bundle is optimized. FIG 2 shows a reference model 200 of a DSM. A Spectrum Management Center (SMC) 210 collects information such as working status of a DSL line through a DSM-D interface 220, interacts with an operator's network through a DSM-S interface 230, and delivers control information through a DSM-C interface 240. As recommended by ANSI, the DSM is divided into four layers in total. On layer-2 (DSM L2) of the DSM, the SMC can collect detailed parameter information through the DSM-D interface, and can relatively accurately control the transmit power spectral density. A major difficulty existing in applying the DSM L2 to an actual product is the obtaining of a Far-End Crosstalk channel.

A method in the prior art is to obtain the Far-End Crosstalk channel through, for example, line grouping, extraction of a line model, and calculation of a line crosstalk model, and is characterized by low accuracy.

Another Far-End Crosstalk channel measurement method in the prior art mainly includes the following steps.

Step 1: Collect a transmit power $P_2(nT)$ of a line 2 and a Signal-to-Noise Ratio parameter $SNR_1(nT)$ of a line 1 based on each subcarrier in a fixed time interval (T).

In an actual operation process, much dynamic information exists, for example, joining or leaving the network, bit swap (Bit Swap), and SRA. Such dynamic changes occur with the change of a transmit power spectrum.

Step 2: Calculate a transmit power change $P_{del2}(nT)$ by subtracting an average transmit power from the transmit power, namely, $P_{del2}(nT) = P_2(nT) - E[P_2(nT)]$.

Step 3: Calculate a noise of the line 1: $N_1(nT) = SNR_1(nT) - (P_1(nT) - H_{log1}(f_0))$.

If the line 2 imposes Far-End Crosstalk onto the line 1, when the transmit power spectrum of the line 2 changes, a noise power of the line 1 changes accordingly. Definitely, when more than one crosstalk sources of the line 1 exist, a general noise change rule of the line 1 is not only related to the transmit power of the line 2, but also related to transmit powers of other crosstalk sources. However, the noise power change of the line 1 includes transmit power change information of the line 2, namely, $H_{21}(f_0) \cdot P_{del2}(nT) + ... + H_{m1}(f_0) \cdot P_{delm}(nT)$. As line 2 is independent of transmit power changes of other lines that impose crosstalk onto the line 1, when the collected transmit power information is enough, it may be considered that an inner product of the power change of the line 2 and the power changes of other lines is approximately equal to zero: $\langle P_{del2}(nT), P_{delm}(nT) \rangle \approx 0$, $m \neq 2$.

Therefore,

$$\frac{\langle P_{del2}(nT), N_1(nT) \rangle}{\langle P_{del2}(nT), P_{del2}(nT) \rangle}, \text{ where } \langle \cdots \rangle \text{ represents an inner product.} \quad \text{Formula (1)}$$

A result of Formula (1) is a crosstalk coefficient of the line 2 to the line 1 at a specific frequency $f_0$.

Step 4: Calculate crosstalk coefficients at certain frequency or frequencies according to formula (1). The method is defective in that the crosstalk channel function cannot be calculated until massive transmit power changes of the crosstalk sources and the noise power of the crosstalk target are obtained in a time which is long enough.

In other crosstalk channel measurement methods in the prior art, certain functions of a transceiver need to be changed or a test device need to be added to test the crosstalk function specially.

**SUMMARY OF THE INVENTION**

Therefore, there is a need for a method and an apparatus for obtaining a line crosstalk channel quickly.

Embodiments of the present invention provide a Far-End Crosstalk channel estimation method and apparatus in a two-line pair scenario, so as to obtain the Far-End Crosstalk channel quickly.

Embodiments of the present invention further provide a Far-End Crosstalk channel estimation method and apparatus in a CO/RT two-line pair scenario, so as to quickly obtain a Far-End Crosstalk channel imposed by an RT line onto a CO line. Especially, in the embodiments of the present invention, a line noise of the CO line under a condition that the CO line is activated independently is rationally approximated, so that the Far-End Crosstalk channel imposed by the RT line onto the CO line is obtained more conveniently.

Embodiments of the present invention further provide a Far-End Crosstalk channel estimation method and apparatus in a CO/RT multi-line pair scenario. A rational silence line noise is set in place of a precise measurement. In a permissible error range, a joint Far-End Crosstalk channel imposed by RT lines onto a CO line is obtained through simple line control steps, thereby ensuring the practicality in a multi-line pair scenario.

The Far-End Crosstalk channel or the joint Far-End Crosstalk channel obtained through the foregoing methods and apparatuses can be directly used to implement the DSM L2 technology to eliminate or mitigate the impact of crosstalk.

An embodiment of the present invention provides a Far-End Crosstalk channel estimation method, for estimating a Far-End Crosstalk channel imposed by a first line onto a second line in a two-line pair scenario. The method includes: activating a first line independently, and obtaining a line noise of the first line as a first line noise; activating the first line and a second line, and obtaining a line noise of the first line as a second line noise; and determining a Far-End Crosstalk channel imposed by the second line onto the first line to be: (the second line noise - the first line noise)/a transmit power spectral density of the second line, where the transmit power spectral density of the second line is known. The first line may be a CO line, and the second line may be an RT line.

An embodiment of the present invention further provides a Far-End Crosstalk channel estimation method, for estimating a Far-End Crosstalk channel imposed by an RT line onto a CO line in a CO/RT two-line pair scenario. The method includes: activating an RT line and a CO line; obtaining a line noise of the CO line as a first line noise; obtaining a line noise of the RT line as a second line noise; and determining a Far-End Crosstalk channel imposed by the RT line onto the CO line to be (the second line noise - the first line noise)/a transmit power spectral density of the RT line, where the transmit power spectral density of the RT line is known.

An embodiment of the present invention further provides a Far-End Crosstalk channel estimation method, for estimating a joint Far-End Crosstalk channel imposed by all RT lines onto a CO line when at least one CO line and at least one RT line exist. The method includes: setting a predetermined silence line noise of all lines; controlling all RT lines so that all the RT lines have the same transmit power spectral density; activating all the lines, and obtaining a line noise of a CO line as a first line noise; and determining a joint Far-End Crosstalk channel function imposed by all the RT lines onto the CO line to be: (the first line noise - the predetermined silence line noise)/the transmit power spectral density of the RT lines.

The setting the predetermined silence line noise of all the lines may include: selecting a proper noise power spectral density as the predetermined silence line noise.

The setting the predetermined silence line noise of all the lines may further include: activating all the lines, obtaining line noises of all the lines, and selecting a minimum line noise in the obtained line noises as the predetermined silence line noise.

An embodiment of the present invention further provides a Far-End Crosstalk estimation method, for estimating a Far-End Crosstalk channel imposed by an RT line onto a CO line in a CO/RT two-line pair scenario. The method includes: determining a line noise of a CO line under a condition that the CO line is activated independently as a first line noise; activating an RT line and the CO line, and obtaining a line noise of the CO line as a second line noise; and determining a Far-End Crosstalk channel imposed by the RT line onto the CO line to be: (the second line noise - the first line noise)/a transmit power spectral density of the RT line, where the transmit power spectral density of the RT line is known.

An embodiment of the present invention further provides a Far-End Crosstalk channel estimation apparatus, for estimating a Far-End Crosstalk channel imposed by a first line onto a second line in a two-line pair scenario. The apparatus includes: a first obtaining unit, configured to activate a first line independently, and obtain a line noise of the first line as a first line noise; a second obtaining unit, configured to activate the first line and a second line, and obtain a line noise of the first line as a second line noise; and a determination unit, configured to determine a Far-End Crosstalk channel imposed by the second line onto the first line to be: (the second line noise - the first line noise)/a transmit power spectral density of the second line, where the transmit power spectral density of the second line is known.

An embodiment of the present invention further provides a Far-End Crosstalk channel estimation apparatus, for estimating a Far-End Crosstalk channel imposed by an RT line onto a CO line in a CO/RT two-line pair scenario. The apparatus includes: an activation unit, configured to activate an RT line and a CO line; a first obtaining unit, configured to obtain a line noise of the CO line as a first line noise; a second obtaining unit, configured to obtain a line noise of the RT line as a second line noise; and a determination unit, configured to determine a Far-End Crosstalk channel imposed by the RT line onto the CO line to be: (the second line noise - the first line noise)/a transmit power spectral density of the RT line, where the transmit power spectral density of the RT line is known. An embodiment of the present invention further provides a Far-End Crosstalk channel estimation apparatus, for estimating a joint Far-End Crosstalk channel imposed by all RT lines onto a CO line when at least one CO line and at least one RT line exist. The apparatus includes: a setting unit, configured to set a predetermined silence line noise of all lines; a control unit, configured to control all RT lines so that all the RT lines have the same transmit power spectral density; an obtaining unit, configured to activate all the lines, and obtain a line noise of a CO line as a first line noise; and a determination unit, configured to determine a joint Far-End Crosstalk channel imposed by all the RT lines onto the CO line to be (the first line noise - the predetermined silence line noise)/the transmit power spectral density of the RT lines.

Through the Far-End Crosstalk channel estimation method and apparatus of the present invention, the Far-End Crosstalk channel can be estimated quickly only through simple line control operations with no need of an additional test device or collection of massive statistic information for a long period of time.

## BRIEF DESCRIPTION OF THE DRAWINGS

To illustrate the technical solutions according to the embodiments of the present invention more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.

FIG 1 is a schematic diagram of Far-End Crosstalk in a CO/RT two-line pair scenario;

FIG 2 shows a reference model of Dynamic Spectrum Management (DSM) in the prior art;

FIG 3 is a flow chart of a Far-End Crosstalk channel estimation method according to a first embodiment of the present invention;

FIG 4 is a flow chart of a Far-End Crosstalk channel estimation method according to a second embodiment of the present invention;

FIG 5 is a flow chart of a Far-End Crosstalk channel estimation method according to a third embodiment of the present invention;

FIG 6 shows a block diagram of an apparatus for estimating a Far-End Crosstalk channel according to an embodiment of the present invention;

FIG 7 shows a block diagram of an apparatus for estimating a Far-End Crosstalk channel according to another embodiment of the present invention;

FIG 8 shows a block diagram of an apparatus for estimating a Far-End Crosstalk channel according to another embodiment of the present invention;

FIG. 9 shows a schematic block diagram of a Spectrum Management Center (SMC) according to an exemplary embodiment of the present invention; and

FIG 10 shows a schematic block diagram of a DSL system according to an exemplary embodiment of the present invention.

## DETAILED DESCRIPTION OF THE EMBODIMENTS

The technical solutions according to the embodiments of the present invention will be clearly and completely described in the following with reference to the accompanying drawings. It is obvious that the embodiments to be described are a part rather than all of the embodiments of the present invention. All other embodiments obtained by persons skilled in the art based on the embodiments to be described without creative efforts shall fall within the protection scope of the present invention.

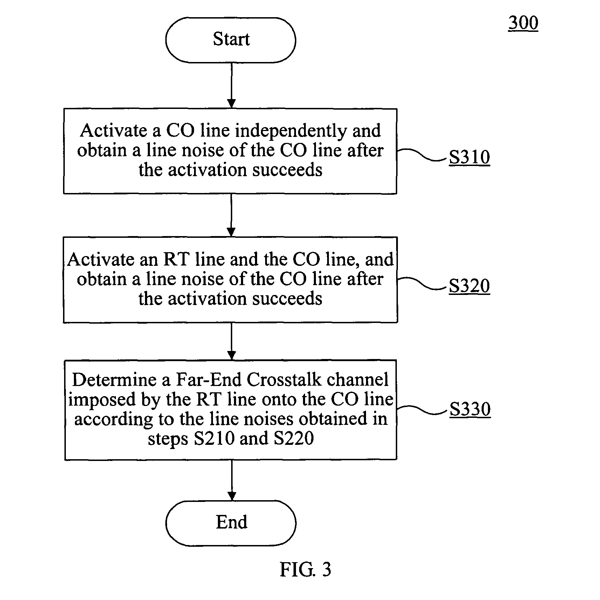

FIG 3 is a flow chart of a Far-End Crosstalk channel estimation method 300 according to a first embodiment of the present invention. The method 300 is applicable to a two-line pair (or two-line) scenario. It is apparent to those skilled in the art that the Far-End Crosstalk imposed by an RT line onto a CO line affects the performance most seriously. Therefore, the estimation of the Far-End Crosstalk channel imposed by the RT line onto the CO line is of great significance for avoiding, eliminating, or mitigating the impact of crosstalk. In view of this, the method 300 is specifically described below with the estimation of the Far-End Crosstalk channel imposed by the RT line onto the CO line in a CO/RT two-line pair scenario shown in FIG 1 as an example. It should be noted that the method 300 may be used to estimate the Far-End Crosstalk channel imposed by a line onto another line in a scenario of any two line pair. The method 300 estimates the Far-End Crosstalk channel imposed by the CO line onto the RT line based on a line noise (LN) feedback. As shown in FIG 3, the method includes the following steps.

Step S310: Activate a CO line independently when no interference exists; and obtain a line noise $LN_{\text{co}}^{\text{no}-xtalk}$ of the CO line after the activation succeeds. In case of independent activation, the line noise $LN_{\text{co}}^{\text{no}-xtalk}$ of the CO line is a Gaussian white noise, and may be expressed as:

$$LN_{\text{co}}^{\text{no}-xtalk} = \sigma_{co}^2 \qquad\qquad \text{Formula (2)}$$

in which, $\sigma_{co}^2$ is a power spectral density of the Gaussian white noise of the CO line in case of independent activation.

Step S320: Activate both an RT line and the CO line, and obtain a line noise $LN_{\text{co}}^{with-xtalk}$ of the CO line after the activation succeeds. In this case, the line noise $LN_{\text{co}}^{with-xtalk}$ of the CO line includes information about the Far-End Crosstalk imposed by the RT line onto the CO line, and may be expressed as:

$$LN_{\text{co}}^{with-xtalk} = H_{co,rt}S_{rt} + \sigma_{co}^2 \qquad\qquad \text{Formula (3)}$$

in which, $H_{co,rt}$ represents a Far-End Crosstalk channel function imposed by the RT line onto the CO line, $S_{rt}$ represents a transmit power spectral density of the RT line, and $S_{rt}$ is known and controllable.

Step S330: Determine the Far-End Crosstalk channel function $H_{co,rt}$ imposed by the RT line onto the CO line according to results obtained in steps S310 and S320. Specifically, Formulas (2) and (3) are combined to obtain:

$$LN_{co}^{with\_xtalk} = H_{co,rt}S_{rt} + LN_{co}^{no\_xtalk} \qquad \text{Formula (4)}$$

From Formula (4), it is deduced that:

$$H_{co,rt} = \frac{LN_{co}^{with\_xtalk} - LN_{co}^{no\_xtalk}}{S_{rt}} \qquad \text{Formula (5)}$$

It should be noted that as known to those skilled in the art, the line noise, the Gaussian white noise, the Far-End Crosstalk channel function, and the transmit power spectral density mentioned in foregoing description are all related to frequency. The Far-End Crosstalk channel function at a specific frequency, multiple frequencies, or the whole frequency band can be estimated through the method 300 as required.

The line noise in the method 300 can absolutely be obtained by using an existing device, for example, an existing DSL chipset in the industry, without adding a test device. Therefore, through the method 300 according to the first embodiment of the present invention, the Far-End Crosstalk channel in the CO/RT two-line pair scenario can be estimated quickly only through simple line control operations, with no need of an additional test device or collection of massive statistic information for a long period of time.

In the Far-End Crosstalk channel estimation method according to the first embodiment of the present invention, because the line noise of the CO line under a condition of independent activation is obtained by independently activating of the CO line, the CO line needs to be activated twice. However, the process may be simplified by approximating the line noise of the CO line under the condition of independent activation. A second embodiment of the present invention provides another Far-End Crosstalk channel estimation method, in which the CO line needs to be activated only once.

When multiple lines as optimization objects are in the same line bundle, the lines are under the same temperature condition and suffer from the same Radio Frequency Interference (RFI), which make all the lines have a similar background noise. That is to say, under the condition of independent activation, the line noise of an RT line is substantially equal to the line noise of a CO line. In addition, when the CO line and the RT line are activated simultaneously, because the crosstalk imposed by the CO line onto the RT line is so small that it is ignorable, it is further assumed that the line noise of the RT line when both the CO line and the RT line are activated is equal to the line noise of the CO line under the condition that the CO line is activated independently. Such an approximation is practical in practical application.

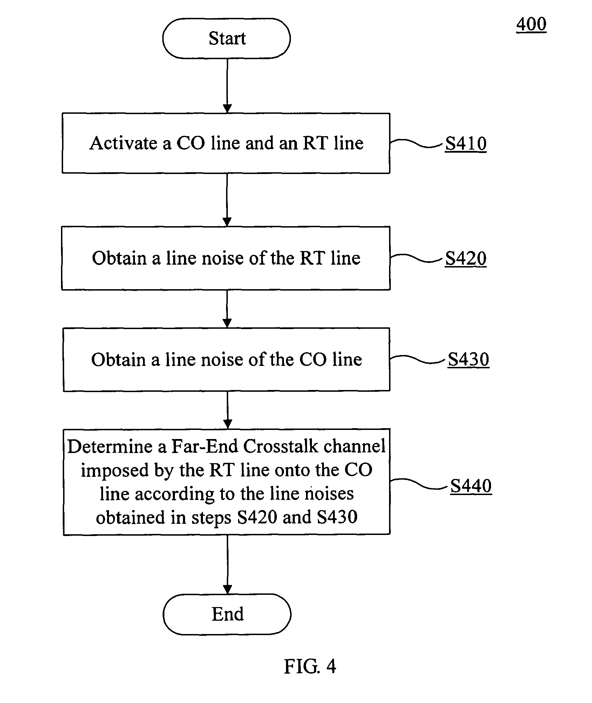

FIG. 4 is a flow chart of a Far-End Crosstalk channel estimation method 400 according to the second embodiment of the present invention. The method 400 is applicable to a CO/RT two-line pair scenario. As shown in FIG 4, the method includes the following steps.

Step S410: Activate an RT line and a CO line simultaneously. Perform steps S420 and S430 after the activation succeeds.

Step S420: Obtain a line noise $LN_{rt}^{with\_xtalk}$ of the RT line.

Step S430: Obtain a line noise $LN_{co}^{with\_xtalk}$ of the CO line. $LN_{co}^{with\_xtalk}$ includes information about the crosstalk imposed by the RT line onto the CO line, and may be expressed as:

$$LN_{co}^{with\_xtalk} = H_{co,rt}S_{rt} + LN_{co}^{no\_xtalk} \qquad \text{Formula (6)}$$

Similar to Formula (3), $H_{co,rt}$ represents a Far-End Crosstalk channel function imposed by the RT line onto the CO line. Typically, at a frequency f0, the value of $H_{co,rt}$ is a constant. $S_{rt}$ represents a transmit power spectral density of the RT line, and $S_{rt}$ is known and controllable.

Step S440: Determine a value of the Far-End Crosstalk channel function $H_{co,rt}$ imposed by the RT line onto the CO line according to results obtained in steps S420 and S430.

As described, it is assumed that the line noise of the RT line under the condition of independent activation is equal to the line noise of the CO line, and the line noise of the RT line under the condition that both the RT line and the CO line are activated is equal to the line noise of the CO line under the condition of independent activation, namely:

$$LN_{co}^{no\_xtalk} \approx LN_{rt}^{with\_xtalk} \approx LN_{rt}^{no\_xtalk} \qquad \text{Formula (7)}$$

Therefore, Formulas (6) and (7) are combined to obtain:

$$H_{co,rt} = \frac{LN_{co}^{with\_xtalk} - LN_{rt}^{with\_xtalk}}{S_{rt}} \qquad \text{Formula (8)}$$

It should be noted that as known to those skilled in the art, the line noise, the Far-End Crosstalk channel function, and the transmit power spectral density mentioned in foregoing description are all related to frequency. The Far-End Crosstalk channel function at a specific frequency, multiple frequencies, or the whole frequency band can be estimated through the method 400 as required. Through the method 400 according to the second embodiment of the present invention, the Far-End Crosstalk channel in the CO/RT two-line pair scenario can be estimated quickly through much more simple line control operations, with no need of an additional test device or collection of massive statistic information for a long period of time. Although approximation is involved in the method 400, the error caused by the approximation is tolerable.

The Far-End Crosstalk channel estimation methods according to the first and second embodiments of the present invention are intended for a CO/RT two-line pair scenario. However, the methods may also be expanded to apply in a CO/RT multi-line pair scenario including multiple CO lines and multiple RT lines which are in the same line bundle.

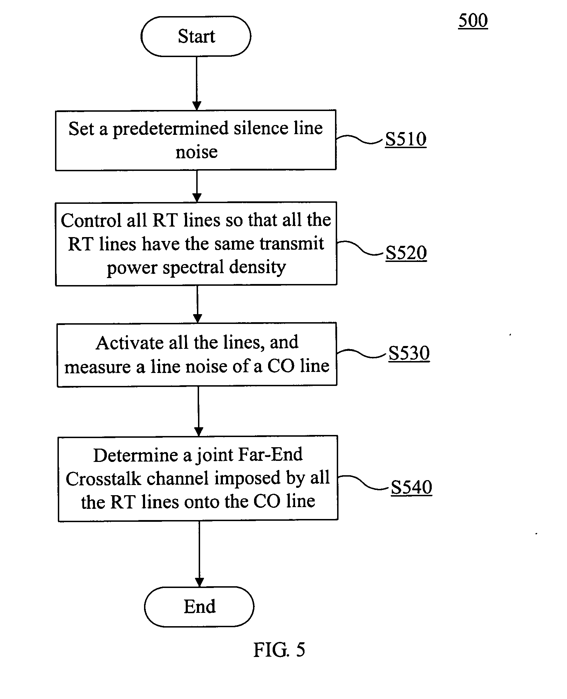

FIG 5 shows a FEXT channel estimation method 500 applicable to a CO/RT multi-line pair scenario according to a third embodiment of the present invention. As shown in FIG 5, the method includes the following steps.

Step S510: Set a proper noise as an alternative of a silence line noise of all lines. The proper noise is referred to as a predetermined silence line noise $PSD_{initial}$ below. The predetermined silence line noise may be set in different ways. The following gives an exemplary method of setting the predetermined silence line noise.

After activating all the lines, line noises of all the lines are obtained, and the predetermined silence line noise is determined based on information of the line noises. For example, a minimum line noise in all the line noises is selected as the predetermined silence line noise; however the present invention is not limited thereto. A line noise next to the minimum line noise may be selected as the predetermined silence line noise; or several minimum line noises are selected, and averaged as the predetermined silence line noise. Another exemplary method of setting the predetermined silence line noise is: instead of obtaining a line noise, directly selecting a properly sized noise power spectral density (such as, -140 dBm/Hz) as the predetermined silence line noise. It is known to those skilled in the art that the value of the predetermined silence line noise is related to frequency. The method of setting the predetermined silence line noise is not limited in the embodiment of the present invention, the predetermined silence line noise of all the line may be determined by using other methods.

Step S520: Control all RT lines so that all the RT lines have the same transmit power spectral density. In this embodiment, $PSD_{rt}$ is used to represent the transmit power spectral density of the RT lines.

Step S530: Activate all the lines, including the RT lines and CO lines; and measure a line noise of a CO line after the activation succeeds. In this case, the measured line noise of the CO line is an addition of crosstalk information imposed by the RT lines onto the CO line and the line noise of the CO line under the condition of independent activation, and is expressed as:

$$LN_{co}^{with\_xtalk} = PSD_{rt} \times H_{co,rt}^{cmb} + LN_{co}^{no\_xtalk} \qquad \text{Formula (9)}$$

In the formula, $H_{co,rt}^{cmb}$ is a joint Far-End Crosstalk channel function, and indicates the Far-End Crosstalk imposed by all the RT lines onto the CO line; $LN_{co}^{no\_xtalk}$ is a line noise of the CO line udner the condition of independent activation, and is replaced by the predetermined silence line noise $PSD_{initial}$ determined in step S510 in this embodiment.

Step S540: Determine the joint Far-End Crosstalk channel function by Using the foregoing information:

$$H_{co,rt}^{cmb} = \frac{QLN_{co}^{with\text{-}xtalk} - PSD_{initial}}{PSD_{rt}} \qquad \text{Formula}(10)$$

It should be noted that as known to those skilled in the art, the values of the predetermined silence line noise, the line noise, the joint Far-End Crosstalk channel function, and the transmit power spectral density mentioned in foregoing description are all related to frequency. The joint Far-End Crosstalk channel function at a specific frequency, multiple frequencies, or the whole frequency band can be estimated through the method 500 as required.

Through the method 500 according to the third embodiment of the present invention, the joint Far-End Crosstalk channel in the CO/RT multi-line pair scenario can be estimated quickly through simple line control operations with no need of an additional test device or collection of massive statistic information for a long period of time. Although approximation is involved in the method 500, the error caused by the approximation is tolerable.

The Far-End Crosstalk channel functions obtained according to the first to third embodiments of the present invention, and especially the joint Far-End Crosstalk channel function obtained according to the third embodiment are directly applicable to various spectrum optimization methods of DSM L2, to avoid, eliminate or mitigate the crosstalk between subscriber lines and enhance the line performance.

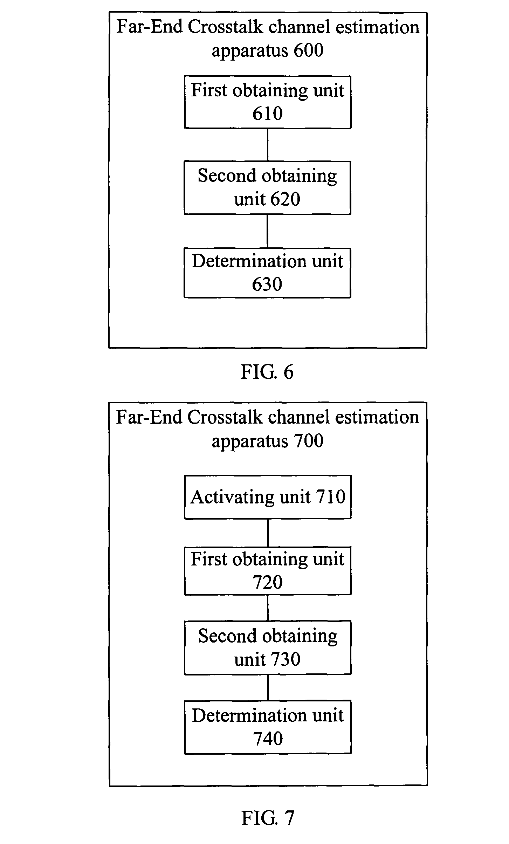

FIG 6 is shows a block diagram of an apparatus 600 for estimating a Far-End Crosstalk channel according to an embodiment of the present invention. The apparatus 600 is configured to estimate a Far-End Crosstalk channel imposed by a first line onto a second line in a two-line pair scenario. As shown in FIG 6, the apparatus 600 includes: a first obtaining unit 610, configured to activate a first line independently, and obtain a line noise of the first line as a first line noise; a second obtaining unit 620, configured to activate the first line and a second line, and obtain a line noise of the first line as a second line noise; and a determination unit 630, configured to determine a Far-End Crosstalk channel imposed by the second line onto the first line to be: (the second line noise - the first line noise)/a transmit power spectral density of the second line, where the transmit power spectral density of the second line is known. For example, the first line may be a CO line, and the second line may be an RT line.

FIG 7 shows a block diagram of an apparatus 700 for estimating a Far-End Crosstalk channel in a CO/RT two-line pair scenario according to another embodiment of the present invention. As shown in FIG 7, the apparatus 700 includes: an activating unit 710, configured to activate an RT line and a CO line; a first obtaining unit 720, configured to obtain a line noise of the CO line as a first line noise; a second obtaining unit 730, configured to obtain a line noise of the RT line as a second line noise; and a determination unit 740, configured to determine a Far-End Crosstalk channel imposed by the RT line onto the CO line to be: (the second line noise - the first line noise)/a transmit power spectral density of the RT line, where the transmit power spectral density of the RT line is known.

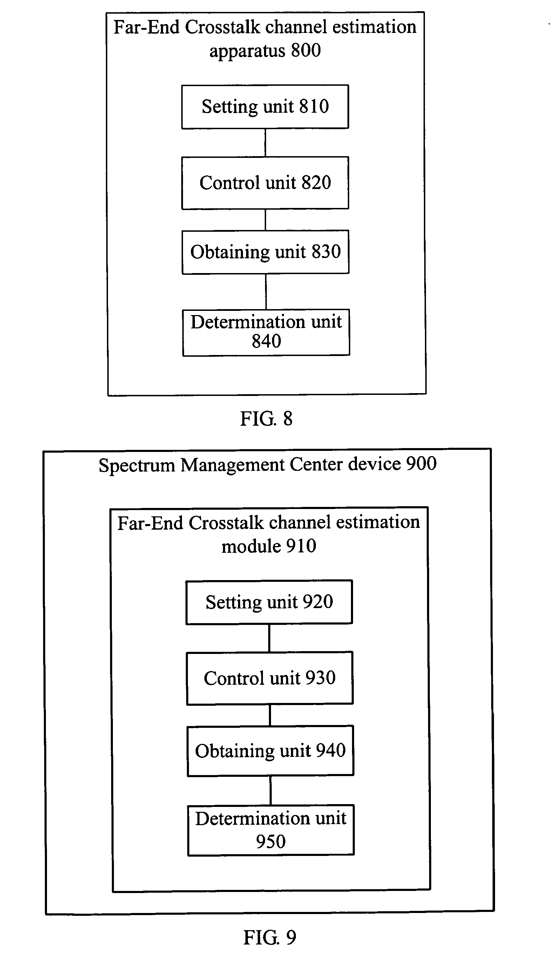

FIG 8 shows a block diagram of an apparatus 800 for estimating a joint Far-End Crosstalk channel in a CO/RT multi-line pair scenario according to another embodiment of the present invention. As shown in FIG 8, the apparatus 800 includes: a setting unit 810, configured to set a predetermined silence line noise of all lines; a control unit 820, configured to control all RT lines so that all the RT lines have the same transmit power spectral density; an obtaining unit 830, configured to activate all the lines, and obtain a line noise of a CO line as a first line noise; and a determination unit 840, configured to determine a joint Far-End Crosstalk channel function imposed by all the RT lines onto the CO line to be: (the first line noise - the predetermined silence line noise)/the transmit power spectral density of the RT lines.

For example, the Far-End Crosstalk channel estimation apparatuses 600, 700, and 800 according to the embodiments of the present invention may be set on an SMC. However, the present invention is not limited thereto. In practical application, those skilled in the art can absolutely, according to practical demands, set the apparatuses 600, 700, and 800 on other suitable network devices in a DSL network system; or set the apparatuses 600, 700, and 800 on multiple network devices in a distributed way.

FIG 9 shows a schematic block diagram of an SMC 900 according to an exemplary embodiment of the present invention. As shown in FIG 9, the SMC 900 has a Far-End Crosstalk channel estimation module 910, configured to estimate a joint Far-End Crosstalk channel imposed by all RT lines onto a CO line when at least one Central Office (CO) line and at least one Remote Terminal (RT) line exist. The Far-End Crosstalk channel estimation module 910 includes: a setting unit 920, configured to set a predetermined silence line noise of all lines; a control unit 930, configured to control all the RT lines so that all the RT lines have the same transmit power spectral density; an obtaining unit 940, configured to control and activate all the lines, and obtain a line noise of the CO line as a first line noise; and a determination unit 950, configured to determine the joint Far-End Crosstalk channel function imposed by all the RT lines onto the CO line to be: (the first line noise - the predetermined silence line noise)/the transmit power spectral density of the RT lines.

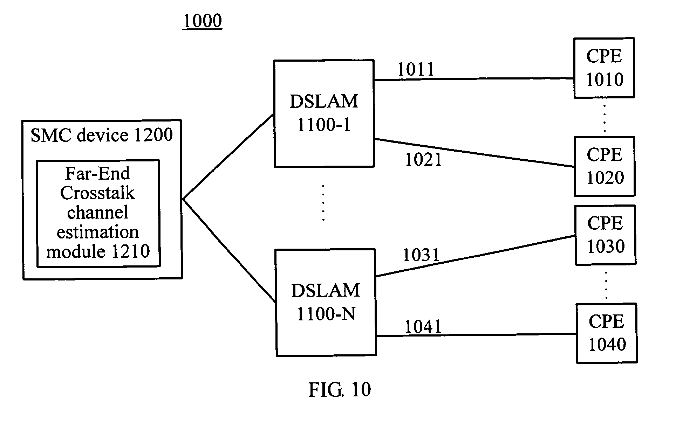

FIG 10 shows a schematic block diagram of a DSL system 1000 according to an exemplary embodiment of the present invention. As shown in FIG 10, the DSL system 1000 may include multiple DSL Access Multiplexer (DSLAM) 1100-1 to 1100-N. The DSLAMs are configured to implement multiplexing of multiple DSL lines. Multiple Customer Premises Equipment CPE 1010 to 1040 are respectively connected to a DSLAM 1100 through a corresponding twisted pair 1011, 1021, 1031, or 1041 (that is, a line pair, which is referred to as a DSL line below). The DSL lines 1011, 1021, 1031, and 1041 may be located in the same line bundle, and include at least one CO line and at least one RT line. The Spectrum Management Center 1200 is connected to the DSLAM 1100-1 to 1100-N, and is configured to perform network management and control. In the DSL system 1000, the Spectrum Management Center 1200 may include a Far-End Crosstalk channel estimation module 1210. For example, the Far-End Crosstalk channel estimation module 1210 may be a module corresponding to the apparatus 800. Alternatively, the Far-End Crosstalk channel estimation module corresponding to the apparatus 600, 700, or 800 may also be distributed on the Spectrum Management Center 1200 and the DSLAM; or distributed on other network devices in the DSL system in other manners.

The conventional Far-End Crosstalk channel test method requires the change of certain functions of a transceiver, or the addition of a test device, which increases the complexity and cost; or even if no additional test is needed, statistics about the transmit power and Signal-to-Noise Ratio need to be transmitted for a long period of time, which is not practical. According to the embodiments of the present invention, a real Far-End Crosstalk channel function can be estimated quickly only through simple line control operations, with no need to change the functions of the transceiver or add additional test, and no need of massive statistic information or a long period of waiting time. Persons of ordinary skill in the art can recognize that the exemplary units and steps of algorithm described with reference to the embodiments disclosed herein may be implemented by electronic hardware and/or computer software. In order to further clarify the interchangeability of the hardware and software, in the foregoing description, the exemplary structures and steps are generally described based on functions. Whether the functions are implemented through hardware or software depends on specific applications of the technical solution and designed constraint conditions. Those skilled in the art can use different methods to implement the functions for each specific application, but such implementations should not be regarded as falling outside the scope of the present invention. The steps of the method or the algorithm described with reference to the embodiments disclosed herein may be implemented through hardware and/or a software module executed by a processor. The software module may be located in a Random Access Memory (RAM), a memory, a Read-Only Memory (ROM), an electrically programmable ROM, an electrically erasable programmable ROM, a register, a hard disk, a moveable disk, a CD-ROM, or any other storage media well-known in the art.

Although some embodiments of the present invention are shown and described, it should be understood by those skilled in the art that various modifications can be made to the embodiments without departing from the principle and spirit of the present invention, and the modifications fall in the scope of the present invention.

## Claims

**1.**   A Far-End Crosstalk channel estimation method, for estimating a Far-End Crosstalk channel imposed by a first line onto a second line in a two-line pair scenario, comprising:

activating a first line independently, and obtaining a line noise of the first line as a first line noise;
activating the first line and a second line, and obtaining a line noise of the first line as a second line noise; and
determining a Far-End Crosstalk channel imposed by the second line onto the first line to be:

(the second line noise - the first line noise)/a transmit power spectral density of the second line,

wherein the transmit power spectral density of the second line is known.

**2.**   The method according to claim 1, wherein the first line is a Central Office (CO) line, and the second line is a Remote Terminal (RT) line.

**3.**   A Far-End Crosstalk channel estimation method, for estimating a Far-End Crosstalk channel imposed by an RT line onto a CO line in a Central Office (CO)/Remote Terminal (RT) two-line pair scenario, comprising:

activating an RT line and a CO line;
obtaining a line noise of the CO line as a first line noise;
obtaining a line noise of the RT line as a second line noise; and
determining a Far-End Crosstalk channel imposed by the RT line onto the CO line to be:

(the second line noise - the first line noise)/a transmit power spectral density of the RT line;

wherein the transmit power spectral density of the RT line is known.

4. A Far-End Crosstalk channel estimation method, for estimating a joint Far-End Crosstalk channel imposed by all RT lines onto a CO line when at least one Central Office (CO) line and at least one Remote Terminal (RT) line exist, comprising:

setting a predetermined silence line noise of all lines;
controlling all RT lines so that all the RT lines have the same transmit power spectral density;
activating all the lines, and obtaining a line noise of a CO line as a first line noise; and
determining a joint Far-End Crosstalk channel function imposed by all the RT lines onto the CO line to be:

(the first line noise - the predetermined silence line noise)/the transmit power spectral density of the RT lines.

5. The method according to claim 4, wherein the setting the predetermined silence line noise of all the lines comprises:

selecting a proper noise power spectral density as the predetermined silence line noise.

6. The method according to claim 4, wherein the setting the predetermined silence line noise of all the lines comprises:

activating all the lines, obtaining line noises of all the lines, and setting the predetermined silence line noise according to the obtained line noises.

7. The method according to claim 6, wherein the setting the predetermined silence line noise according to the obtained line noises comprises:

selecting a minimum line noise in the obtained line noises as the predetermined silence line noise.

8. A Far-End Crosstalk channel estimation method, for estimating a Far-End Crosstalk channel imposed by an RT line onto a CO line in a Central Office (CO)/Remote Terminal (RT) two-line pair scenario, comprising:

determining a line noise of a CO line under the condition of independent activation as a first line noise;
activating an RT line and the CO line, and obtaining a line noise of the CO line as a second line noise; and
determining a Far-End Crosstalk channel imposed by the RT line onto the CO line to be:

(the second line noise - the first line noise)/a transmit power spectral density of the RT line,

wherein the transmit power spectral density of the RT line is known.

9. The method according to claim 8, wherein the determining the first line noise comprises:

activating the CO line independently, and obtaining the line noise of the CO line as the first line noise.

10. The method according to claim 8, wherein the determining the first line noise comprises:

activating the RT line and the CO line, and obtaining a line noise of the RT line as an approximate first line noise.

11. The method according to any one of claims 1 to 10, further comprising:

directly applying the determined Far-End Crosstalk channel or joint Far-End Crosstalk channel imposed by the RT line onto the CO line to a spectrum optimization method of Dynamic Spectrum Management Layer 2 (DSM L2), to eliminate or mitigate crosstalk between lines.

12. A Far-End Crosstalk channel estimation apparatus, for estimating a Far-End Crosstalk channel imposed by a first line onto a second line in a two-line pair scenario, comprising:

a first obtaining unit, configured to activate a first line independently, and obtain a line noise of the first line as a first line noise;
a second obtaining unit, configured to activate the first line and a second line, and obtain a line noise of the first line as a second line noise; and
a determination unit, configured to determine a Far-End Crosstalk channel imposed by the second line onto the first line to be:

(the second line noise - the first line noise)/a transmit power spectral density of the second line,

wherein the transmit power spectral density of the second line is known.

13. The apparatus according to claim 12, wherein the first line is a Central Office (CO) line, and the second line is a Remote Terminal (RT) line.

14. A Far-End Crosstalk channel estimation apparatus, for estimating a Far-End Crosstalk channel imposed by an RT line onto a CO line in a Central Office (CO)/Remote Terminal (RT) two-line pair scenario, comprising:

an activation unit, configured to activate an RT line and a CO line;
a first obtaining unit, configured to obtain a line noise of the CO line as a first line noise;
a second obtaining unit, configured to obtain a line noise of the RT line as a second line noise; and
a determination unit, configured to determine a Far-End Crosstalk channel imposed by the RT line onto the CO line to be:

(the second line noise - the first line noise)/a transmit power spectral density of the RT line,

wherein the transmit power spectral density of the RT line is known.

15. A Far-End Crosstalk channel estimation apparatus, for estimating a joint Far-End Crosstalk channel imposed by all RT lines onto a CO line when at least one Central Office (CO) line and at least one Remote Terminal (RT) line exist, comprising:

a setting unit, configured to set a predetermined silence line noise of all lines;
a control unit, configured to control all RT lines so that all the RT lines have the same transmit power spectral density;
an obtaining unit, configured to activate all the lines, and obtain a line noise of a CO line as a first line noise; and
a determination unit, configured to determine a joint Far-End Crosstalk channel function imposed by all the RT lines onto the CO line to be:

(the first line noise - the predetermined silence line noise)/the transmit power spectral density of the RT line.

16. A Spectrum Management Center (SMC), comprising a Far-End Crosstalk channel estimation module, configured to estimate a joint Far-End Crosstalk channel imposed by all RT lines onto a CO line when at least one Central Office (CO) line and at least one Remote Terminal (RT) line exist, wherein the Far-End Crosstalk channel estimation module comprises:

a setting unit, configured to set a predetermined silence line noise of all lines;
a control unit, configured to control all the RT lines so that all the RT lines have the same transmit power spectral density;
an obtaining unit, configured to activate all the lines, and obtain a line noise of the CO line as a first line noise; and

a determination unit, configured to determine the joint Far-End Crosstalk channel function imposed by all the RT lines onto the CO line to be:

(the first line noise - the predetermined silence line noise)/the transmit power spectral density of the RT lines.

17. A Digital Subscriber Line (DSL) system, comprising multiple Customer Premises Equipment, multiple DSL lines, multiple DSL Access Multiplexer (DSLAM) and a Spectrum Management Center (SMC), wherein: each Customer Premises Equipment is connected to one of the multiple DSLAMs through a corresponding DSL line, the multiple DSL lines comprise at least one Central Office (CO) line and at least one Remote Terminal (RT) line, each DSLAM implements multiplexing of the multiple DSL lines, and the SMC is connected to the multiple DSLAM and is configured to perform network management and control; wherein

the SMC comprises a Far-End Crosstalk channel estimation module, configured to estimate a joint Far-End Crosstalk channel imposed by all RT lines onto a CO line, and the Far-End Crosstalk channel estimation module comprises:

a setting unit, configured to set a predetermined silence line noise of all lines;
a control unit, configured to control all the RT lines so that all the RT lines have the same transmit power spectral density;
an obtaining unit, configured to activate all the lines, and obtain a line noise of the CO line as a first line noise; and
a determination unit, configured to determine the joint Far-End Crosstalk channel function imposed by all the RT lines onto the CO line to be:

(the first line noise - the predetermined silence line noise)/the transmit power spectral density of the RT line.

CO O— ————————▶O CPE1

⌐ L2

RT O— ————————▶O CPE2

FIG. 1

<u>200</u>

DSM-C
240

DSL

DSM-S
230

DSL
service
provider

SMC
210

DSL-LT

DSL-NT

DSM-D
220

FIG. 2

<u>300</u>

```
        ╭──────────────╮
        │     Start     │
        ╰──────────────╯
                │
                ▼
   ┌─────────────────────────────┐
   │ Activate a CO line          │
   │ independently and           │
   │ obtain a line noise of the  ├──╮⎯S310
   │ CO line after the           │
   │ activation succeeds         │
   └─────────────────────────────┘
                │
                ▼
   ┌─────────────────────────────┐
   │ Activate an RT line and the │
   │ CO line, and obtain a line  ├──╮⎯S320
   │ noise of the CO line after  │
   │ the activation succeeds     │
   └─────────────────────────────┘
                │
                ▼
   ┌─────────────────────────────┐
   │ Determine a Far-End         │
   │ Crosstalk channel imposed   │
   │ by the RT line onto the CO  ├──╮⎯S330
   │ line according to the line  │
   │ noises obtained in steps    │
   │ S210 and S220               │
   └─────────────────────────────┘
                │
                ▼
        ╭──────────────╮
        │     End       │
        ╰──────────────╯
```

FIG. 3

<u>400</u>

```
              ╭─────────╮
              │  Start  │
              ╰────┬────╯
                   │
                   ▼
    ┌──────────────────────────────┐
    │ Activate a CO line and an RT line │───── S410
    └──────────────┬───────────────┘
                   │
                   ▼
    ┌──────────────────────────────┐
    │ Obtain a line noise of the RT line │───── S420
    └──────────────┬───────────────┘
                   │
                   ▼
    ┌──────────────────────────────┐
    │ Obtain a line noise of the CO line │───── S430
    └──────────────┬───────────────┘
                   │
                   ▼
    ┌──────────────────────────────┐
    │ Determine a Far-End Crosstalk channel │
    │ imposed by the RT line onto the CO    │
    │ line according to the line noises     │───── S440
    │ obtained in steps S420 and S430       │
    └──────────────┬───────────────┘
                   │
                   ▼
              ╭─────────╮
              │   End   │
              ╰─────────╯
```

FIG. 4

500

Start

Set a predetermined silence line noise ⎯ S510

Control all RT lines so that all the RT lines have the same transmit power spectral density ⎯ S520

Activate all the lines, and measure a line noise of a CO line ⎯ S530

Determine a joint Far-End Crosstalk channel imposed by all the RT lines onto the CO line ⎯ S540

End

FIG. 5

Far-End Crosstalk channel estimation apparatus 600

First obtaining unit 610

Second obtaining unit 620

Determination unit 630

FIG. 6

Far-End Crosstalk channel estimation apparatus 700

Activating unit 710

First obtaining unit 720

Second obtaining unit 730

Determination unit 740

FIG. 7

Far-End Crosstalk channel estimation
apparatus 800

Setting unit 810

Control unit 820

Obtaining unit 830

Determination unit
840

FIG. 8

Spectrum Management Center device 900

Far-End Crosstalk channel estimation
module 910

Setting unit 920

Control unit 930

Obtaining unit 940

Determination unit
950

FIG. 9

1000

FIG. 10

# INTERNATIONAL SEARCH REPORT

| International application No. |
|---|
| PCT/CN2010/073595 |

**A. CLASSIFICATION OF SUBJECT MATTER**

H04B3/32 (2006.01) i

According to International Patent Classification (IPC) or to both national classification and IPC

**B. FIELDS SEARCHED**

Minimum documentation searched (classification system followed by classification symbols)

IPC: H04B3/-

Documentation searched other than minimum documentation to the extent that such documents are included in the fields searched

Electronic data base consulted during the international search (name of data base and, where practicable, search terms used)

WPI;EPODOC;CPRS;CNKI: crosstalk, interference, channel, measure+, estimate+, transfer, FEXT

**C. DOCUMENTS CONSIDERED TO BE RELEVANT**

| Category* | Citation of document, with indication, where appropriate, of the relevant passages | Relevant to claim No. |
|---|---|---|
| X | CN1741406A (ALCATEL) 01 Mar. 2006 （01.03.2006） Page 3 line 8- page 4 line 3 of the description, fig.1 | 1-3,8-14 |
| A | The whole document | 4-7,15-17 |
| A | CN1937433A (ALCATEL) 28 Mar. 2007 （28.03.2007） the whole document | 1-17 |
| A | WO9810528A1 (AMATI COMMUNICATIONS CORPORATION) 12 Mar. 1998 （12.03.1998） the whole document | 1-17 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 Aug. 2010 (16.08.2010) | **16 Sep. 2010 (16.09.2010)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer GU, Bo Telephone No. (86-10)62411316 |
|---|---|

Form PCT/ISA /210 (second sheet) (July 2009)

## INTERNATIONAL SEARCH REPORT
Information on patent family members

| | | International application No. |
|---|---|---|
| | | PCT/CN2010/073595 |

| Patent Documents referred in the Report | Publication Date | Patent Family | Publication Date |
|---|---|---|---|
| CN1741406A | 01.03.2006 | US2006039456A1 | 23.02.2006 |
| | | EP1630968A1 | 01.03.2006 |
| | | | |
| CN1937433A | 28.03.2007 | US2007047631A1 | 01.03.2007 |
| | | EP1760904A1 | 07.03.2007 |
| | | US7702008B2 | 20.04.2010 |
| | | | |
| WO9810528A1 | 12.03.1998 | AU4170797A | 26.03.1998 |
| | | US5887032A | 23.03.1999 |
| | | EP1048129A1 | 02.11.2000 |
| | | DE69736614T2 | 27.09.2007 |
| | | EP1048129B1 | 30.08.2006 |
| | | DE69736614E | 12.10.2006 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200910146919